# EUROPEAN PATENT APPLICATION

(11) **EP 4 324 371 A1**
(43) Date of publication of application: **21.02.2024**
(21) Application number: 21936264.7
(22) Date of filing: 14.04.2021
(51) Int. Cl.: A47K 13/14, E03D 9/00

(54) **LINING FOR TOILET SEAT**

(71) Applicant: Pocai, Ricardo, 85530-000 Clevelândia - Paraná (BR)
(72) Inventor: Pocai, Ricardo, 85530-000 Clevelândia - Paraná (BR)
(74) Representative: V.O.
(86) International application number: PCT/BR2021/050155
(87) International publication number: WO 2022/217326

(57) **Abstract**

The present invention relates to a toilet seat cover (100) built in a single piece, comprising a first edge (110) and a second edge (120) which, when surrounding a toilet seat (200), have its perimeters totally or partially overlapped and fastened by the adherence of the material in areas of direct contact with the toilet seat (200) and with each other in overlapping areas (150).

## Description

### Technical Field

The present invention pertains to the field of sanitary equipment and devices, more specifically to sanitary accessories such as casing and protective covers.

### Introduction

The present invention relates to a toilet seat cover, the installation of which makes possible the provision of a simple, effective, low-cost, easy-to-install, and replace physical barrier against microorganisms, that are harmful to the health of toilet seat users in public or private spaces, whether shared and/or used by many people.

### Backgrounds

Sanitary facilities, or restrooms, are found in the most different and diverse shared spaces and/or spaces used by many people, which include, but are not limited to, restrooms in hotels, motels, hospitals and other places for temporary stay/use or for use limited in time.

It is necessary, for reasons of public and private health and hygiene, that the cleaning and disinfection of said shared spaces are carried out relatively frequently in order to prevent it from becoming unhealthy and generating inconveniences regarding laws and regulations related to public health and hygiene, in addition to costs related to the respective operations.

### Prior Art

It is possible to find different solutions in the state of the art to the challenges found in toilet seats covers through solutions that are easy to install and optimize restrooms, especially toilets. However, said solutions often face problems that consist, among others, in insufficient casing of the seating area corresponding to the toilet seat in order to prevent physical contact between the user and the toilet seat, generating problems related to the health and hygiene of users thereof. Problems related to time of use and disuse thereof also arise, since the seat covers from the state of the art make use and reuse impossible in the case of disinfection operations of toilets that may be used, for example, by the same person or group of people for a specific time before being discarded or exchanged.

There are several known solutions for toilet seat covers and casings. An example is seen in GB 2176216, entitled "Toilet seat cover", which discloses a toilet seat cover provided in a piece of fabric with an elastic joint and fastening means to retain it in folded conditions or flexed around a toilet seat. Preferably, the fabric is toweling, square- or rectangular-shaped, and has a joint for both ends that may carry out fastening means such as, but not limited to, Velcro, so that both edges have corresponding fastening means on opposite sides of the fabric (according to the document's abstract).

In document GB 2176216, it is possible to observe some of the problems inherent to the state of the art under consideration. Firstly, as much as the toweling fabric offers some comfort to the user on cold days, it does not correspond to good hygiene practices and protocols, which also incurs unnecessary costs if the object is used as a disposable. This type of product, if reused, generates additional problems such as storage, final costs, low versatility, and wear and tear over time. Finally, and based on the figures in document GB 2176216, the cover does not surround the toilet seat in its entirety, again implying problems related to good hygiene and health practices and protocols.

Another prior art solution is seen in document US 4,586,202, also entitled "Toilet seat cover", which discloses a cover for a toilet seat comprising a cover main body and a retainer for fastening the cover main body to the toilet seat. The cover main body is in the shape of a short tube of elastic fabric and has an elastic element attached to the peripheral edge of each open end of the tube. The retainer is a ring which size corresponds to the range of measurements of the inner and outer peripheral edges of the toilet seat and is formed on its outer side surface with a groove to fit the elastic element fastened to one end of the cover main body. The cover, which may be fastened and removed from the toilet seat in an easy and quick manner, may be manufactured without the need for a complicated sewing process and may also be freely used on toilet seats of different sizes or shapes (as shown in the document summary).

In US 4,586,202, there is a concern to avoid complex fastening processes. However, its solution results in the need for a manufacturing process with seams, hems, and channels for passing the elastic/tensioning elements, which may act as a housing for dirt, bacteria and viruses.

In addition, the physical limitations of the product result in the need to store some variations thereof (taking into account different models and sizes of toilets), once again requiring greater expenses both in the acquisition and in the storage, and subsequent replacement of the elements having major wear. Thus, in US 4,586,202 a number of disadvantages common to the prior art of the present field are noted.

Other examples of the relevant prior art that demonstrate similar disadvantages are disclosed and described by patent documents US 2002/0184701, GB 2227503, FR 2618062, and PI 9606435-8 A, among others. It is noteworthy that such solutions result in little versatility or applicability in different types of seats, in addition to demanding different models and proportions for different situations. Clearly such processes and elements make said solutions more expensive, less versatile, and more complex to store. Covers for toilet seats according to the state of the art do not include issues related to public hygiene or practicality and applicability with hygiene practices, such as those usually associated with cleaning sanitary facilities. Finally, said solutions often do not take into account usability and quality of use, installation, and maintenance by end users.

As may be inferred from the previous description, there is room for a solution capable of solving the disadvantages of the state of the art. This means a toilet seat cover with easy application for all types of users without compromise to the quality of use and protection for the user and may eventually be sanitized and reused by a person or group of people for a certain period of time.

There is also space for an improved toilet seat cover that is easy to manufacture, inexpensive and that may be made with anti-allergenic and bactericidal materials.

### Objects of the invention

Therefore, one of the objects of the present invention is providing a seat cover according to the features of claim 1 from the attached set of claims.

Other features and feature details are represented by the dependent claims.

### Brief Description of the Figures

For better understanding and visualization of the object of the present invention, it will now be described with reference to the appended figures, schematically representing the technical effect obtained wherein:
Figure 1: shows a perspective view of a toilet seat cover in the shape of a straight cylinder, according to a preferred embodiment of the invention;
Figure 2: shows a perspective view of a toilet seat cover in frustoconical shape, according to another preferred embodiment of the invention;

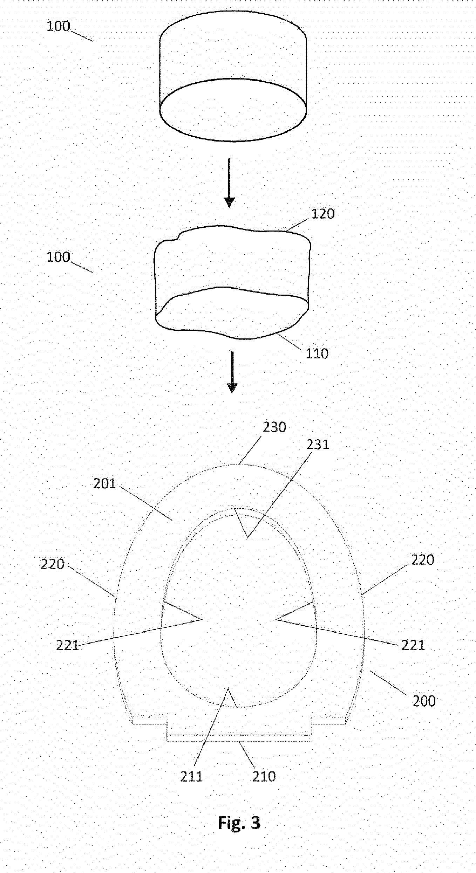

Figure 3: shows a top view of a cover, according to the invention, being applied to a conventional toilet seat;
Figure 4a: shows a top view of the top portion of a toilet seat in which a cover according to the invention is being installed, representing the beginning of the fastening and the initial anchoring;
Figure 4b: shows a top view of the seat of Figure 4a, representing subsequent installation steps of the cover;
Figure 4c: shows a bottom perspective view of the seat of Figure 4b, representing subsequent installation steps of the cover;
Figure 4d: shows a top view of the seat of Figure 4c, representing subsequent installation steps of the cover;
Figure 5: shows a top perspective view of a toilet seat provided with a cover according to the invention, representing the final result and the overlapping areas;
Figure 6: shows a bottom perspective view of a toilet seat provided with a cover according to the invention, representing the final result and the overlapping areas;
Figure 7: shows a top view of a toilet seat provided with a cover according to the invention, in which the cover has an identification or seal; and
Figure 8: shows a side view of the seat of Figure 7.

### Detailed Description of the invention

A toilet seat cover (100) or simply cover (100), according to the invention, is configured essentially in a single piece, with an initial ring or tube shape, to surround and case a toilet seat (200), comprising at least one first edge (110) and at least one second edge (120), both preferably circumferential in their initial state, wherein, by surrounding the toilet seat (200), the perimeters formed by the first edge (110) and the second edge (120) overlap in whole or in part in any region of the inner or outer surface of the cover (100) and/or in any region of the outer surface of the toilet seat (200), wherein the fastening of the overlapping regions or portions of the edges (110, 120) in the structure of the cover (100) and/or the toilet seat (200) is caused by the adherence of the material in areas of direct contact with the toilet seat (200) and with each other in overlapping areas (150).

The cover (100) is preferably made of elastic or resilient material, such as, but not limited to, latex, natural rubber, surface-treated elastane composites and other suitable materials, which may have bactericidal or anti-allergic properties. Although the present invention is intended to a disposable cover (100), the material to be used must also allow for hygiene and eventual sterilization, so that it may be used, for example, more than once by the same user or the same group of users. An example of this type of application is in a hotel or inn or hospital room during the period of stay of the guest(s) or patient(s), with or without companion(s) in the same room. Therefore, the cover material (100) must be resistant to abrasion, shear, chemical products, preferably, but not limited to, the usual cleaning and/or sanitizing and/or disinfecting products for this type of use situation and be resistant and appropriate to other conventional practices of application, use, cleaning, and removal of products of this nature.

A toilet seat (200), in the context of the present invention, is a conventional device fastened to a toilet, comprising a top side (201) or upward facing side, bottom side (202) or downward facing side, outer (210) and inner rear portions (211), outer (220) and inner side portions (221), and outer (230) and inner front portions (231).

Due to its initially annular or tubular shape and its elasticity, the cover (100) of the invention can be installed on the toilet seat (200) starting from any of its sides (201, 202) and from any of its outer portions (210, 220, 230). In this way, it is possible to design the cover (100), in an exemplary application, as involving the top and bottom sides (201, 202) of the toilet seat (200) by means of its stretching (tensioning, tracking) from the circumferential edges (110, 120), wherein the cover surface may be larger or smaller depending on the shape of the toilet seat (200), having as a limitation only the stretching resistance (or tensile strength) of the cover material (100).

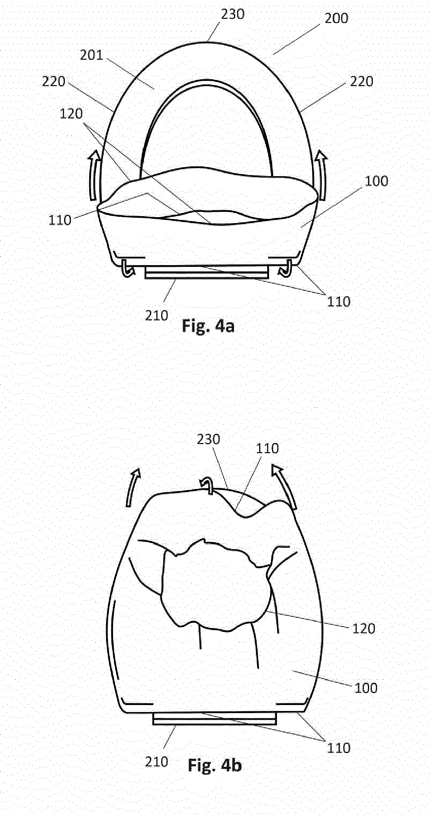

A non-limiting example of installing the cover (100) on a toilet seat (200) is the initial arrangement of part of the perimeter of the first edge (110) over the outer rear portion (210) on the top side (201), promoting the initial anchoring of the cover (100) on the top side (201) by means of the first edge (110), as illustrated in Figure 4a. Next, the part of the perimeter of the first edge (110) which is still free is stretched towards the outer front portion (230) covering the outer (220) and inner side portions (221) and subsequently arranged over the inner (231) and outer front portions (230), going around the outer portions (220, 230) and reaching the bottom side (202) of the toilet seat (200), as illustrated in Figure 4b.

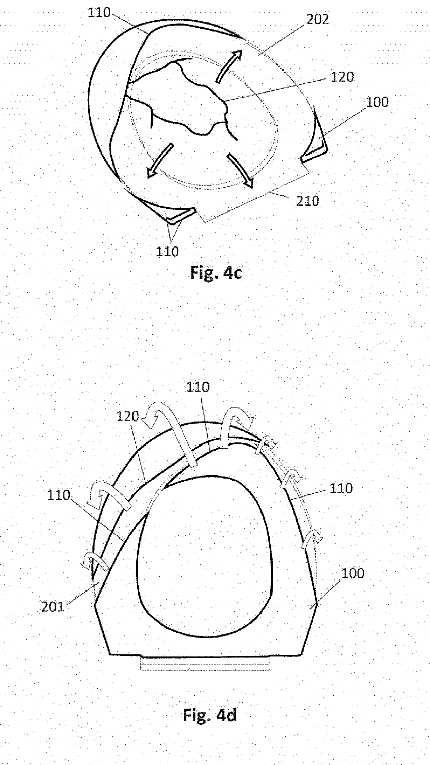

It should be noted that the cover (100) will remain fastened to the toilet seat (200) by the tension imposed on its material by the stretching of the first edge (110) and also by the adherence of its material to the material of the toilet seat (200). It is also noteworthy that, at this step, part of the cover (100) will be in contact with the toilet seat (200) and that, while the first edge (110) is practically in full contact with the toilet seat (200), the second edge (120) will remain free and essentially aligned with the inner perimeter of the toilet seat (200), as illustrated by Figures 4b and 4c.

Subsequently, part of the perimeter of the second edge (120) is stretched and arranged over the inner (211) and outer rear portion (210), on the bottom side (202), promoting the anchoring of the cover (100) on the bottom side (202) by means of the second edge (120), the part of the perimeter of the second edge (120) which is still free being then stretched and arranged over the bottom side (202) and thus covering the inner (221) and outer side portions (220), and the inner (231) and outer front portions (230) going around and reaching the top side (201) and overlapping the cover (100) material that is already in contact with the toilet seat (200), as illustrated by Figure 4c and partially by Figure 4d. Once this is done, from the top side (201), the perimeter of the first edge (110) is stretched and arranged over the outer side portions (220, 230), going around again and reaching the bottom side (202) of the seat, overlapping the cover (100) material that is already in contact with the seat (200), forming overlapping areas (150) as illustrated by Figures 4d, 5 and 6.

Therefore, the first edge (110) switches sides (201, 202) twice or goes around the edges of the toilet seat (200) at least twice, while the second edge (120) switches sides (201, 202) once or goes around the edges of the toilet seat (200) at least once.

It should be noted that the cover (100) will remain fastened to the toilet seat (200) both by the tension imposed on its material by the stretching along its edges (110, 120) and by the adherence of its material to the toilet seat (200) material in combination with the adherence of its own material in the overlapping areas (150). Therefore, the cover (100) material will overlap, forming coplanar edges (110, 120) on the top (201) and bottom sides (202) of the toilet seat (200).

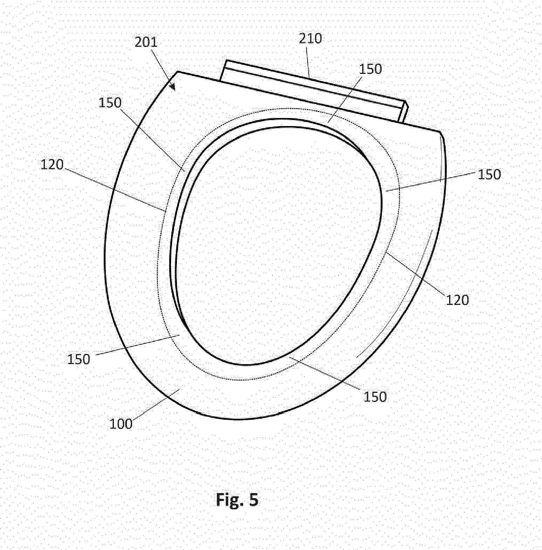

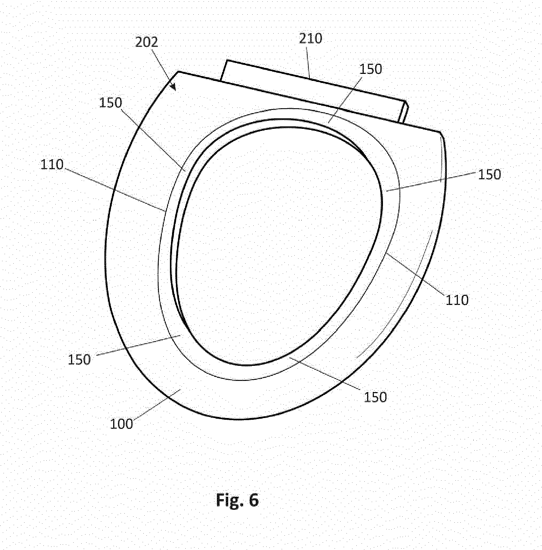

As illustrated by Figure 5, the second edge (120), now coplanar, is integrally cased by the cover (100) material on the top side (201) of the toilet seat (200). The first edge (110) is visible, but on the bottom side (202) or facing downwards, as illustrated in Figure 6. The cover (100) of the present invention is versatile and easy to install, and can even be assembled starting, for example, from the bottom side (202) and/or from the second edge (120), which, however, would leave the apparent coplanar edge facing up, which is not recommended in terms of hygiene, user comfort, aesthetics, and finishing quality.

When surrounding the toilet seat (200), the overlapping edges (110, 120) form overlapping areas (150) which, due to the resilient or elastic material, provide a sealing connection that allows for uniform adherence across all surfaces of the toilet seat (200), without forming pockets, channels, gaps or folds and thus allowing the complete cleaning and sanitization of the cover (100) and consequently of the toilet seat (200) without leaving residues.

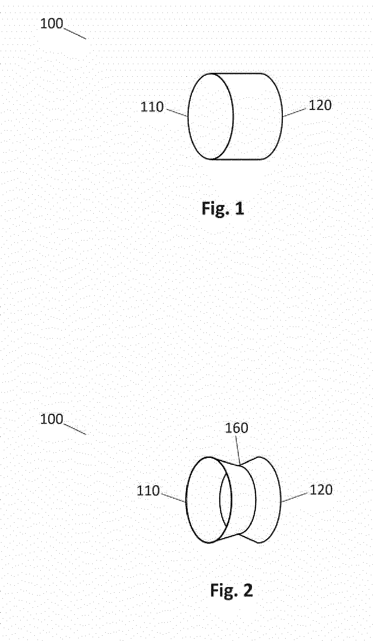

In a preferred non-limiting embodiment of the invention, the cover (100) may be configured with a straight cylinder shape, as illustrated in Figure 1. In another preferred non-limiting embodiment of the invention, the cover (100) may be configured with a frustoconical shape, as illustrated in Figure 2, comprising one or more intermediate sections (160) with diameter smaller than those of the edges (110, 120), increasing the tension at the time of assembly and thus allowing an even tighter wrapping than that obtained with the version with straight cylinder shape.

In this way, the invention consists of providing a toilet seat cover (100) built in one piece and which surrounds the toilet seat (200) in its entirety. The cover (100) allows an easy and simple installation by the user, in which the application may be carried out without any additional means, since the surfaces of the cover (100) itself offer a form of frictional union that allows improved stability and grip to the toilet seat (200) when overlapping.

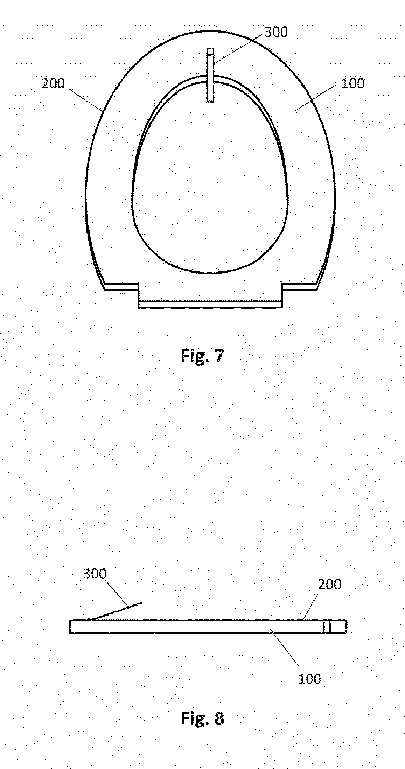

In a preferred non-limiting embodiment of the invention, the cover (100) has an identification (300) or seal, which may be a strip, tape or the like, indicating that the cover (100) has been recently changed and has not yet been used, and must be arranged in the cover (100) so as to be visible and, preferably, in a position that hinders the use of the toilet seat (200), for example, projecting upwards and/or inwards, forcing the user to remove it, as illustrated by Figures 7 and 8. Furthermore, the identification (300) must be built so as not to allow its reuse once it has been removed from the surface of the cover (100).

In the embodiment where this identification (300) is a strip, it may further comprise an RFID, a bar code, QR code and the like to act as an authentication seal and to ensure positioning, containing useful information to the user such as product data, manufacturer, establishment that is using it, date and time of installation and/or cleaning, advertising material and other information that may be considered useful or applicable, but not limited to these. This identification (300) may also, for example, be used for check in and validation of use for day-use in hotels and inns. By not using other additional means for fastening, there are no problems related to the process of washing and packing the toilet seat (200).

In another preferred non-limiting embodiment of the invention, the cover (100) may be produced in biodegradable material, which may be discarded or recycled without further damage to the environment.

In another preferred non-limiting embodiment of the invention, the cover (100) may be designed according to the type of toilet seat (200), which varies according to use and user. Thus, it is possible to design variants of the embodiment intended also for seats developed for children, for the elderly and for people with special needs, without, however, departing from the scope of the present invention.

It is important to emphasize that, unlike the toilet seats covers known from the state of the art, the object of the present invention also allows the working time, and the interdiction of the toilets of/by the hygiene teams, to be reduced, as it is made in a single piece, and does not rely on, or needs, additional means for installation and assembly, reducing overall sanitation costs.

Finally, as it is versatile, the cover (100) of the invention may also be used in companies, schools, universities, factories, theaters, parks, bars and restaurants, bus, sea and airport terminals, stadiums, concert halls, shopping malls, detention centers and chemical toilet units used for outdoor events and festivals.

### Final considerations

It is evident that the measures and relations between measurements described for the present invention may vary according to the dimensions of the toilet seat cover (100) which corresponds to the standards and norms adopted by the industry in the sector. Exhaustive practical tests, however, have shown that the aforementioned dimensions and their relations are highly efficient and effective in terms of the reliability and safety provided by the toilet seat cover, so that it is possible to manufacture a product with high performance and durability.

### Conclusion

It will be readily understood by a person skilled in the art that modifications may be made to the present invention without departing from the concepts set out in the above description. Such modifications should be considered within the scope of the present invention. Accordingly, the particular embodiments described in detail above are only illustrative and exemplary and do not limit the scope of the present invention, which should be given to the full extent of the appended claims and any and all equivalents thereof.

## Claims

1. Toilet seat cover, **characterized in that** it is built in a single piece, comprising a first edge (110) and a second edge (120) which, when involving a toilet seat (200), have their perimeters totally or partially overlapped and fastened by the adherence of the material in areas of direct contact with the toilet seat (200) and with each other in overlapping areas (150).

2. Cover, according to claim 1, **characterized in that** the edges (110, 120) are preferably circumferential in their initial state.

3. Cover, according to claim 1, **characterized in that** the cover (100) is configured in a straight cylinder shape.

4. Cover, according to claim 1, **characterized in that** the cover (100) may be configured with a frustoconical shape, comprising one or more intermediate sections (160) of smaller diameter than the edges (110, 120).

5. Cover, according to claim 1, **characterized in that** the cover (100) comprises an identification (300) or seal, which may be a strip, tape or the like.

6. Cover, according to claim 5, **characterized in that** the identification (300) indicates that the seat (200) has been recently changed and has not yet been used.

7. Cover, according to claim 5, **characterized in that** the identification (300) may further comprise an RFID, a bar code, QR code and the like to act as an authentication seal and to ensure positioning, containing information such as product data, manufacturer, establishment that is using it, date and time of installation and/or cleaning, advertising material and other information.

8. Cover, according to claim 5, **characterized in that** the identification (300) may also be used for check in and use validation procedures for day-use in hotels and inns.
